# EUROPEAN PATENT SPECIFICATION

(11) **EP 1 666 346 B1**
(45) Date of publication and mention of the grant of the patent: **19.03.2008**
(21) Application number: 05110923.9
(22) Date of filing: 18.11.2005
(51) Int. Cl.: B62K 5/04

(54) **Method for replacing the front wheels of a three-wheeled vehicle**
Methode zum Wechseln der Vorderräder eines dreirädigen Fahrzeugs
Procédé de remplacer des roues avants d'un véhicule à trois roues

(30) Priority: 06.12.2004 IT MI20042340
(43) Date of publication of application: 07.06.2006
(73) Proprietor: PIAGGIO & C. S.p.A., 56025 Pontedera (Pisa) (IT)
(72) Inventor: Marcacci, Maurizio, 57128 LIVORNO (IT)
(74) Representative: De Gregori, Antonella

(56) References cited:
- EP-A- 1 155 950
- DE-B- 1 063 473
- US-A- 5 762 351
- ANONYMOUS: "Bedienungsanleitung Trike: Bremsen und Reifen" INTERNET ARTICLE, [Online] XP002370300 Retrieved from the Internet: URL:http://web.archive.org/web/20040719013 841/http://www.anthrotech.de/Service/Handb uch_ab_2003.pdf> [retrieved on 2004-07-19]

## Description

The present invention concerns a method for replacing the front wheels of a rolling three-wheeled vehicle, equipped with two steering front wheels.

Two-wheeled vehicles, such as motorcycles and scooters, always have the front wheel in contact with the ground and for this reason the replacement of such a wheel requires that the vehicle be positioned, with great physical effort, on brackets specially made for the purpose or that it be rested on the ground.

In this last case, the vehicle is positioned on the ground laying on one side, always involving great physical effort and the possibility of damage to the plastics of the vehicle.

Currently, as is well-known, in the field of vehicles a substantial diversification of models has gradually been proposed, in particular there is increasing interest in "hybrid" vehicles that combine the characteristics of motorcycles, in terms of handling, with the stability of four-wheeled vehicles.

Such models are represented, for example, by rolling three-wheeled vehicle equipped with two steering front wheels.

The aforementioned three-wheeled vehicles can advantageously be driven like a motorcycle (driver leaning) at the same time, however, offering the usual stability of four-wheeled vehicles.

For example, in documents DE 1 063 473 and US 5 762 351 rolling three-wheeled vehicles are described, equipped with two front steering wheels and an articulated parallelogram type front suspension group, wherein means for selectively locking the roll of the vehicle by preventing the movements of said articulated parallelogram are furthermore provided.

Such vehicles, in general, have the same problems as two-wheeled vehicles in replacing the front wheels with the added hindrance of being heavier. The greater weight consequently means a greater physical effort to place them on the suitable brackets or a higher probability of damage laying then on the ground.

In light of the above, there is clearly a need to be able to have a method, like the one according to the present invention, that allows the front wheels of a three-wheeled vehicle equipped with two front steering wheels to be replaced without particular physical effort and/or special support elements.

Therefore, the purpose of the present invention is that of solving the problems of the prior art providing a method for replacing the front wheels of a three-wheeled vehicle equipped with two front steering wheels that does not require particular physical effort and, at the same time, any support or lifting means specially researched for the purpose.

Another purpose of the present invention is that of providing a method for replacing the front wheels of a three-wheeled vehicle that can be carried out at any location and by anybody, ever people who are not experts.

Finally, another purpose of the present invention is that of providing a method for replacing the front wheels of a three-wheeled vehicle that is simple and cost-effective to carry out.

These and other purposes are accomplished by the method for replacing the front wheels of a rolling three-wheeled vehicle according to the present invention that has the characteristics of the attached claim 1.

Further characteristics of the invention are highlighted by the subsequent claims.

Further characteristics and advantages of the present invention shall become clearer from the present description, given for illustrating and not limiting purposes, with reference to the attached drawings, in which:
- figure 1 shows a schematic front view of a portion of the frame of the rolling three-wheeled vehicle before being subjected to the replacement method, according to the present invention, of the left front wheel;
- figure 2 shows a schematic front view of the frame of the three-wheeled vehicle of figure 1 raised on the central trestle with the left front wheel lifted from the ground, before replacement;
- figure 3 shows a schematic front view of the frame of the three-wheeled vehicle of figure 1 raised on the central trestle with the left front wheel removed; and
- figure 4 shows a schematic front view of the frame of the three-wheeled vehicle of figure 1 raised on the central trestle with the left front wheel replaced.

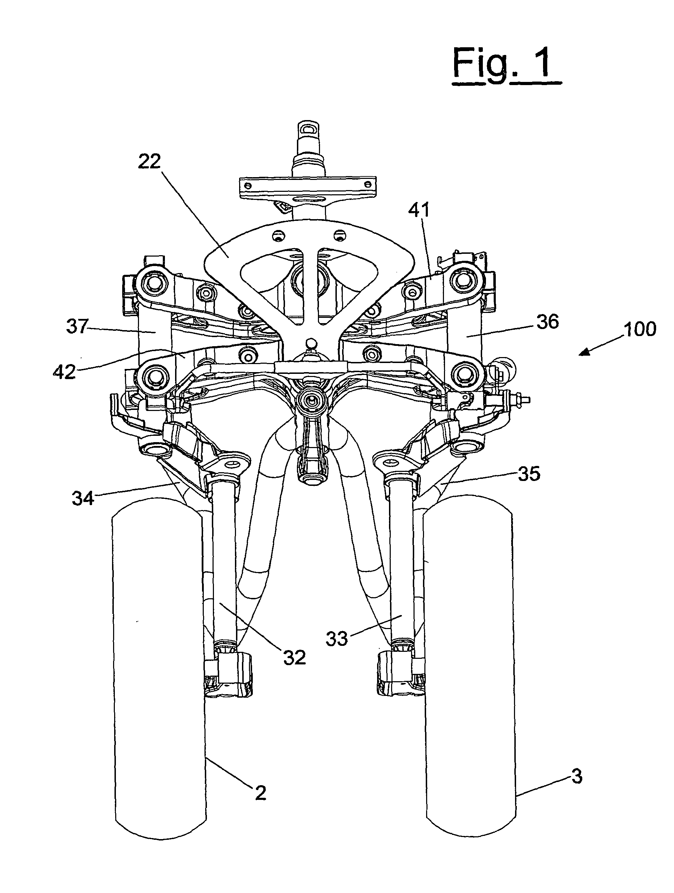

With reference to figures 1-4 some steps of the method for replacing the front wheels of a rolling three-wheeled vehicle 100 equipped with two front steering wheels 2, 3, at least one central trestle, not shown, and a roll locking means of the vehicle are shown.

As an example, hereafter the description shall be aimed at the application on a rolling three-wheeled vehicle with two front steering wheels and a rear one, like the one described in patent application ITMI2003A1108 or in patent IT1317529 to the same Applicant, but it is clear how it must not be considered to be limited to this specific use.

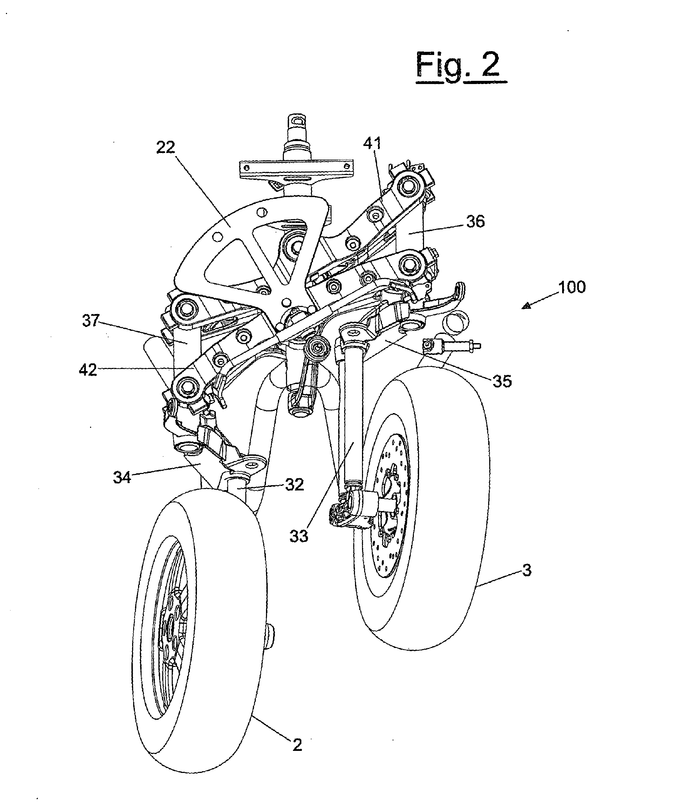

The vehicle in question, wholly indicated with reference numeral 100, as indicated in figures 1 and 2, has two front steering wheels 2, 3 and a fixed rear wheel, not shown.

The two front wheels 2, 3 are each equipped with an independent suspension 34, 35, in turn provided with an independent shock absorber 32, 33.

The steering mechanism is based upon an articulated quadrilateral kinematism made with two rigid horizontal cross members 41, 42, connected to the frame through cylindrical pins fixed to their middle, and two short pipes 36, 37, arranged on the side of the horizontal cross members 41, 42 and connected to the independent front suspensions 34, 35.

In order to avoid possible flipping over, which can occur, for example, when the vehicle is travelling below a certain speed or with zero rolling angle, an anti-roll device is provided.

The anti-roll device is equipped with a stop element 22, integral with an element of the aforementioned kinematism in its rolling movements, a locking element for locking the position of said stop element 22 and a parking group, not shown, guided by suitable control means for commanding the locking element.

The locking element, locking the position of the stop element 22 with respect to the frame of the vehicle 100, prevents the movements of the articulated kinematism 42, 41, 37, 36 and therefore the rolling of the vehicle.

The method for replacing the front wheels 2 or 3 of a three-wheeled vehicle, like the one described above, comprises the following steps:
a) locking the front part of the vehicle in an inclined position at the side, as shown for example in figure 2;
b) placing the vehicle 100 on the central trestle;
c) replacing the front wheel 2 or 3 that is raised from the ground.

By lifting the vehicle 100 on the central trestle, after having locked the front part thereof in inclined position at the side, the two wheels 2 and 3 do not simultaneously rest on the same plane.

In particular, one, to be precise the wheel 2 in figure 2, is rested on the ground and the other, wheel 3, is raised from the ground.

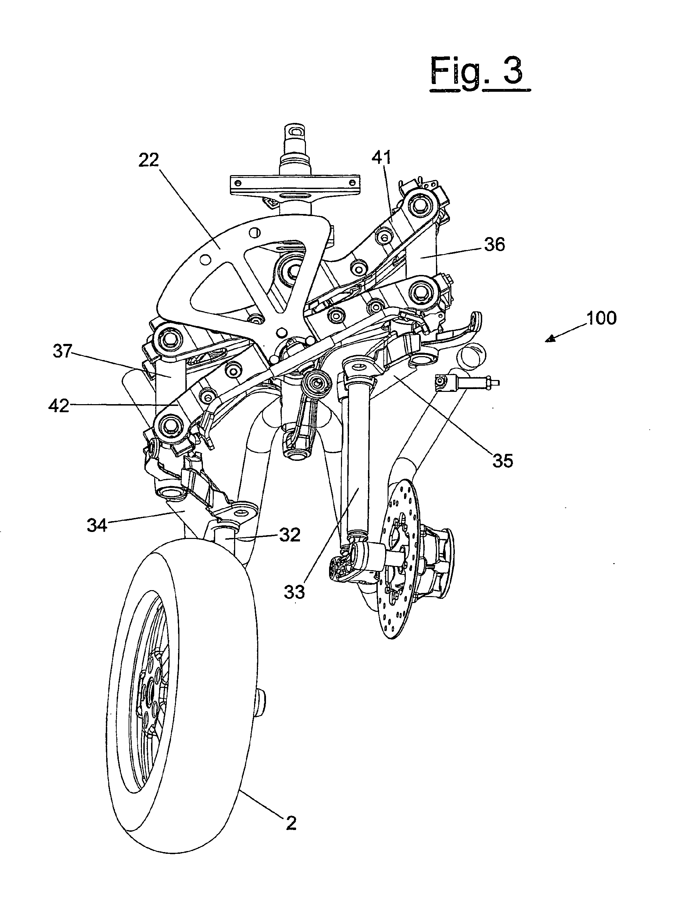

During step c), in a known way, the bolts that fasten the hubcaps of the wheel 2 or 3 to the frame are unscrewed, in such a way allowing the removal of the wheel, as shown in figure 3.

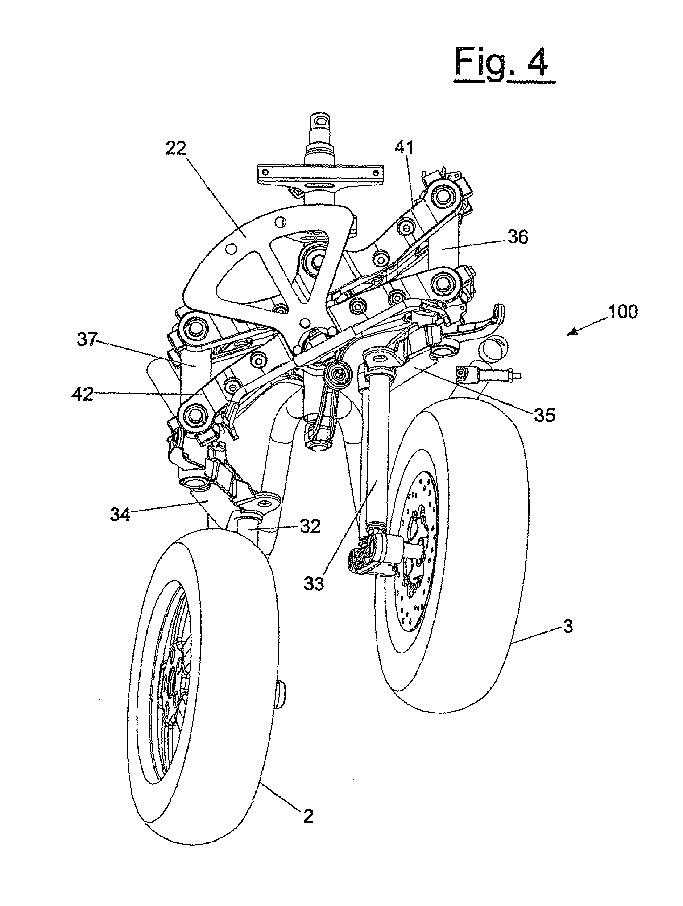

Once removed, the wheel is replaced, in a *per se* known way, see figure 4.

Although in the drawings reference is made to the left wheel 3 of the vehicle 100, it should nevertheless be understood that the same method can be carried out with the right wheel 2 by simply locking the vehicle 100 arranged on the central trestle in such a way that it is the right wheel 2 that is lifted from the ground.

The method just described, unlike conventional methods for replacing the front wheels of motor vehicles, allows the user to replace one of the front wheels, without having to rest the motor vehicle on the ground or on special lifting means or brackets.

In such a way excessive physical effort and possible damage to the plastics of the vehicle are avoided.

Moreover, the extreme ease in carrying out the method according to the present invention makes the application of such a method within the reach of even inexpert people and allows it to be carried out at any location.

The present invention has been described for illustrating but not limiting purposes, according to its preferred embodiments, but it should be understood that variations and/or modifications can be brought by men skilled in the art without for this reason departing from the relative scope of protection, as defined by the attached claims.

## Claims

1. A method for replacing the front wheels (2, 3) of a rolling three-wheeled vehicle (100) equipped with:
• two front steering wheels (2, 3);
• at least one central trestle;
• a steering mechanism based upon an articulated quadrilateral kinematism made with two rigid horizontal cross members (41, 42), connected to the frame of said vehicle (100) through cylindrical pins fixed to their middle, and two short pipes (36, 37), arranged on the side of said horizontal cross members (41, 42) and connected to independent front suspensions (34, 35) of said vehicle (100); and
• a means for locking the roll of said vehicle (100) by preventing the movements of said articulated quadrilateral kinematism (42, 41, 37, 36),
said metohod being **characterised in that** it comprises the following steps:
a) placing said vehicle (100) on said central trestle;
b) locking, with said locking means, said articulated quadrilateral kinematism (42, 41, 37, 36) in an inclined position in such a way that, once said vehicle (100) has been positioned on said central trestle, one of said two front wheels (2 or 3) is raised from the ground and the other one is in contact with the ground;
c) replacing the front wheel (2 or 3) that is raised from the ground.

2. Method for replacing the front wheels of a three-wheeled vehicle (100) according to claim 1, **characterised in that** during step c) the bolts fastening the wheel (2 or 3) to the frame of said vehicle (100) are unscrewed.

## Patentansprüche

1. Verfahren zum Wechseln der Vorderräder (2, 3) eines rollenden Dreiradfahrzeugs (100), das ausgestattet ist mit:
• zwei vorderen lenkbaren Rädern (2, 3);
• zumindest einem zentralen Stützbock;
• einem Lenkmechanismus auf der Basis einer gelenkigen, vierseitigen kinematischen Anordnung, die mit zwei starren horizontalen Querelementen (41, 42), die mit dem Rahmen des Fahrzeugs (100) durch zylindrische Stifte verbunden sind, die an ihrer Mitte befestigt sind, und zwei kurzen Rohren (36, 37) hergestellt ist, die an der Seite der horizontalen Querelemente (41, 42) angeordnet und mit unabhängigen vorderen Aufhängungen (34, 35) des Fahrzeugs (100) verbunden sind; und
• einem Mittel zum Blockieren des Rollens des Fahrzeugs (100), indem die Bewegungen der gelenkigen vierseitigen kinematischen Anordnung (42, 41, 37, 36) verhindert werden,
wobei das Verfahren **dadurch gekennzeichnet ist, dass** es die folgenden Schritte umfasst, dass:
a) das Fahrzeug (100) auf dem zentralen Stützbock angeordnet wird;
b) mit dem Blockiermittel die gelenkige vierseitige kinematische Anordnung (42, 41, 37, 36) in einer geneigten Position auf eine solche Weise blockiert wird, dass, sobald das Fahrzeug (100) auf dem zentralen Gestell positioniert worden ist, eines der beiden Vorderräder (2 oder 3) von dem Boden abgehoben ist und das andere mit dem Boden in Kontakt steht;
c) das Vorderrad (2 oder 3), das vom Boden angehoben ist, gewechselt wird.

2. Verfahren zum Wechseln der Vorderräder eines Dreiradfahrzeugs (100) nach Anspruch 1,
**dadurch gekennzeichnet, dass**
während des Schrittes c) die Bolzen, die das Rad (2 oder 3) an dem Rahmen des Fahrzeugs (100) befestigen, losgeschraubt werden.

## Revendications

1. Procédé permettant de remplacer les roues avant (2, 3) d'un véhicule (100) à trois roues autorisant le roulis muni de :
• deux roues directrices avant (2, 3),
• au moins un chevalet central,
• un mécanisme de direction fondé sur un mécanisme cinématique en quadrilatère articulé réalisé avec deux éléments croisés horizontaux rigides (41, 42), reliés au cadre dudit véhicule (100) par l'intermédiaire de broches cylindriques fixées sur leur milieu, ainsi qu'avec deux courts tubes (36, 37) disposés sur le côté desdits éléments croisés horizontaux (41, 42) et reliés aux suspensions indépendantes avant (34, 35) dudit véhicule (100), et
• un moyen permettant de bloquer le roulis dudit véhicule (100) en empêchant les mouvements dudit mécanisme cinématique articulé en quadrilatère (42, 41, 37, 36),
ledit procédé étant **caractérisé en ce qu'**il comprend les étapes suivantes :
a) placer ledit véhicule (100) sur ledit chevalet central,
b) verrouiller, avec ledit moyen de blocage, ledit mécanisme cinématique articulé en quadrilatère (42, 41, 37, 36) en une position inclinée de telle manière que, une fois que ledit véhicule (100) a été positionné sur ledit chevalet central, l'une desdites deux roues avant (2 ou 3) est relevée par rapport au sol et l'autre se trouve en contact avec le sol,
c) remplacer la roue avant (2 ou 3) qui est relevée par rapport au sol.

2. Procédé permettant de remplacer les roues avant d'un véhicule (100) à trois roues selon la revendication 1, **caractérisé en ce que**, pendant l'étape c), les boulons fixant la roue (2 ou 3) sur le cadre dudit véhicule (100) sont dévissés.
